(19) Europäisches Patentamt
European Patent Office
Office européen des brevets

(11) **EP 2 897 018 B1**

(12) **EUROPEAN PATENT SPECIFICATION**

(45) Date of publication and mention
of the grant of the patent:
**11.01.2017 Bulletin 2017/02**

(51) Int Cl.:
***G05D 23/19*** *(2006.01)*   ***H05B 33/08*** *(2006.01)*

(21) Application number: **15151853.7**

(22) Date of filing: **20.01.2015**

(54) **Method for providing a visual indication of the set room temperature in an electronic thermostat, and corresponding electronic thermostat**

Verfahren zur Bereitstellung einer visuellen Anzeige der eingestellten Raumtemperatur auf einem elektronischen Thermostat und entsprechender elektronischer Thermostat

Procédé pour fournir une indication visuelle de la température ambiante sur un thermostat électronique et ledit thermostat

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.01.2014 IT BO20140019**

(43) Date of publication of application:
**22.07.2015 Bulletin 2015/30**

(73) Proprietor: **IRSAP SPA**
**45031 Arqua'Polesine (IT)**

(72) Inventors:
• **Zen, Alessandro**
**45100 ROVIGO (IT)**
• **Baratella, Fabio**
**45021 BADIA POLESINE (IT)**
• **Pozzati, Marco**
**45100 ROVIGO (IT)**

(74) Representative: **Boggio, Luigi et al**
**Studio Torta S.p.A.**
**Via Viotti, 9**
**10121 Torino (IT)**

(56) References cited:
**EP-A1- 1 703 356     EP-A2- 2 157 492**
**WO-A1-2007/042984   WO-A1-2008/139369**

**Description**

The present invention concerns a method for providing a visual indication of the set room temperature in an electronic thermostat, and a corresponding electronic thermostat.

In particular, the present invention finds an advantageous, but not exclusive, application in the valve assemblies applied to the radiators of a heating plant, to which the following description will make explicit reference without thereby losing generality.

The radiators of a modern heating plant are usually provided with respective valve assemblies, each of them comprising a valve mounted at the inlet of the radiator to regulate the flow of a heat transfer fluid that circulates in the radiator, an electric actuator to operate the valve and a thermostat to control the actuator. The thermostat comprises a sensor for measuring the room temperature. The most modern thermostats are electronic and include some keys for programming, for example, for setting the desired temperature, and often a liquid crystal display to display, by means of alphanumeric characters, information related to the programming and to the state of the valve assembly. Such information includes, for example, the temperature measured by the thermostat and the desired temperature set by the user.

Usually, the inlet for the heat transfer fluid is arranged in the lower part of the radiator, and therefore the valve assembly is constrainedly mounted in a position that does not allow an easy reading of the information on the display, making the thermostat setting difficult. This problem is typically more serious for elderly users, who have difficulty in bending their legs and back and in interpreting the information showed in an alphanumeric display.

The aforesaid drawbacks are partially solved by using radiators which have the inlet for the heat transfer fluid in their upper part. Obviously, this solution severely limits a free installation of the radiators.

EP1703356 A1 shows a thermostat with a LED display unit mixing the light of LEDs of different ground colours to generate any desired colour, displaying a first colour, eg blue or green, in association with a low set temperature for the thermostat, a second colour, eg red, in association with a high set temperature for the thermostat, and colours on a continuous gamut, eg from blue/green to red, over yellow and orange, in association with intermediate set temperatures for the thermostat.

Object of the present invention is to provide a thermostat and a corresponding valve assembly which are free from the aforesaid drawbacks and, at the same time, are easy and inexpensive to manufacture.

According to the present invention, it is provided a method for providing a visual indication of a desired room temperature value for an electronic thermostat, an electronic thermostat and a valve assembly as defined in the appended claims.

The present invention will now be described with reference to the accompanying drawings, which illustrate a non-limitative embodiment, wherein:

-  Figure 1 shows, according to a perspective view, the valve assembly made and operating according to the present invention;
-  Figure 2 shows, according to a partially sectioned view along a longitudinal axis, the valve assembly of Figure 1; and
-  Figure 3 shows a table of data stored in an electronic board of the valve assembly of Figure 2.

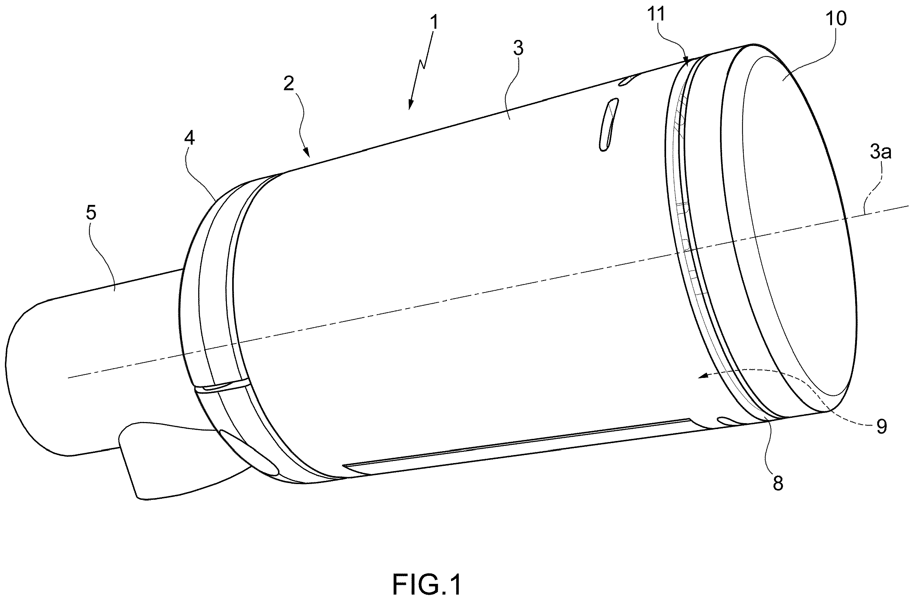

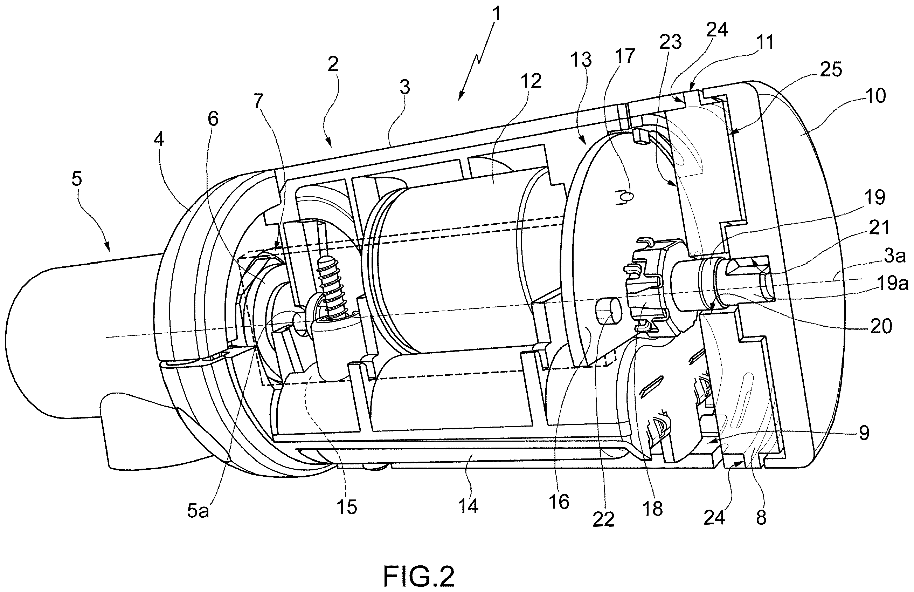

In Figures 1 and 2, reference 1 generally indicates, as a whole, the valve assembly for a radiator (not shown) of a heating plant, said valve assembly being made according to the dictates of the present invention and operating according to the method of the invention.

With reference to Figures 1 and 2, the valve assembly 1 comprises: a cup-shaped body 2, having a function of protective container and being defined by a cylindrical portion 3 and by a rounded bottom 4; a valve 5, which is adapted to be mounted on the radiator to regulate the flow of a heat transfer fluid circulating in the radiator and has a head 6 (Figure 2) coupled to a hole 7 (Figure 2) formed in the bottom 4; a disc 8 of translucent material, which substantially closes the circular opening 9 of the cup-shaped body 2; and a manually operable rotating knob 10 placed over the disc 8. In Figure 1 only a cylindrical side surface 11 of the disc 8 is visible.

With particular reference to Figure 2, the valve assembly 1 comprises, inside the cup-shaped body 2: an actuator 12, which is cinematically coupled to a shaft 5a of the valve 5 to operate the latter, and is preferably constituted by a stepper motor; an electronic thermostat 13 to measure the room temperature and control the actuator 12 so as to open or close, entirely or partially, the valve 5, and then control the flow of heat transfer fluid in the radiator so that the measured room temperature follows a desired room temperature; and two 1.5 volt stylus batteries 14, only one of which is visible in Figure 2, for the power supply of the actuator 12 and of the thermostat 13.

The electronic thermostat 13 comprises: an electronic circuit divided into at least two electronic boards, namely a first one, indicated by reference 15 and shown with a dashed line, which is arranged parallel to a longitudinal axis 3a of the cylindrical portion 3, and a second one, indicated by reference 16, which is arranged transversely to the axis 3a in correspondence of the circular opening 9; a room temperature sensor 17, which is constituted, for example, by an NTC thermistor mounted on the board 16; an encoder 18, which is mounted on the board 16 with its shaft 19 coaxial with axis 3a so that one end 19a of the shaft 19 passes through and protrudes from a central through hole 20 of the disc 8 to couple, with interference, with a central blind hole 21 of the knob 10; and two RGB LEDs 22, which are mounted on the board 16 in diametrically opposite positions with respect to axis 3a (only one LED 22 is shown in Figure 2) so as to light up a first face 23 of the disc 8.

The face 23 of the disc 8 has an annular abutment 24 to be mechanically coupled with the edge of the circular opening 9. The knob 10 has a circular shape to cover the opposite face 25 of the disc 8 and leave uncovered the cylindrical lateral face 11 of the disc 8 which is contiguous with the abutment 24. The diameter of the lateral surface 11 and the outer diameter of the knob 10 substantially coincide with the outer diameter of the cup-shaped body 2 in correspondence of the circular opening 9. In use, the light emitted by the RGB LEDs 22 enters the disc 8 through the face 23 and propagates by diffusion inside the disc 8. Only the part of light coming from the lateral surface 11 is visible outside the valve assembly 1.

The encoder 18 is manually operated by the knob 10 to acquire user commands for setting the desired room temperature. The encoder 18 also comprises a button (not shown) which is operable by exerting an axial pressure on the shaft 19, i.e. by exerting pressure on the knob 10, and which enables the setting of the desired temperature.

Each RGB LED 22 is of a known type, namely it comprises three elementary monochromatic LEDs of red, green and blue colour, and four terminals, namely a common terminal and three power terminals associated with the three elementary LEDs.

The electronic board 15 comprises a microcontroller and a respective memory (not shown), suitably configured to set a desired value of room temperature Tset as a function of a desired variation of room temperature Δtset which is set by rotating the knob 10, and to control the RGB LEDs 22 to generate respective light signals having a colour correlated to the desired value of temperature Tset. Moreover, the microcontroller is configured to generate a control signal for the actuator 12 as a function of a comparison between the measured values of temperature and the desired value of temperature Tset.

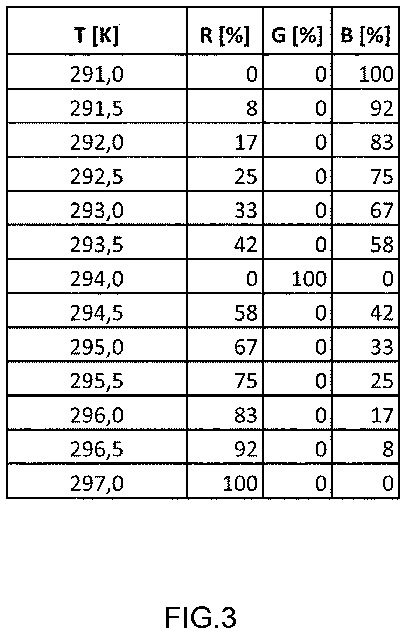

In particular, the memory of the board 15 stores a table associating a plurality of temperature values to a corresponding plurality of triads of colour percentages according to the known additive RGB colour model (Red Green Blue). Figure 3 shows an example of such a table, wherein the temperature values T are expressed in Kelvin. In the example of Figure 3, the temperature values range between a minimum value Tmin equal to 291 K and a maximum value Tmax equal to 297 K, and are therefore suitable for adjusting the desired temperature of a heating plant that makes use of radiators.

Furthermore, the memory of the board 15 stores a maximum variation of temperature ΔT equal to the difference between the maximum value Tmax and the minimum value Tmin, and a maximum angular movement R of the shaft 19 of the encoder 18 corresponding to this maximum variation of temperature ΔT. For example, the movement R is equal to 19 rads, namely it is approximately equal to three full rotations of the knob 10. In this way, the angular movement α imposed by the user on the knob 10 and acquired by the encoder 18 is indicative of the desired variation of temperature Δtset.

The microcontroller of the board 15 is configured to calculate the desired variation of temperature Δtset according to the following formula:

$$\Delta tset = \alpha * \Delta T/R.$$

The microcontroller of the board 15 is configured to determine the desired value of temperature Tset as a function of the desired variation of temperature Δtset and of a previously set temperature value. In particular, the desired variation of temperature Δtset is summed to the previously set temperature value: if the sum exceeds the maximum value Tmax, then the desired value of temperature Tset is set at the maximum value Tmax; if the sum is less than the minimum value Tmin, then the desired value of temperature Tset is set at the minimum value Tmin; otherwise, i.e. if the sum is comprised between the minimum value Tmin and the maximum value Tmax, the desired value of temperature Tset is set at the sum.

The microcontroller of the board 15 is configured to set a desired triad of colour percentages by interpolation, for example linear interpolation, of the triads of colour percentages of the table of Figure 3 by using the desired value of temperature Tset as input data. The microcontroller powers the two RGB LEDs 22 as a function of the desired triad of colour percentages. In particular, the three elementary LEDs are powered with respective voltage signals PWM, each of them having a duty cycle corresponding to a respective percentage of the desired triad of colour percentages.

In use, the microcontroller stores the last desired value of temperature that has been set. When the user presses the knob 10, the microcontroller activates the function of desired temperature setting, namely turns on the RGB LEDs 22 by powering them as a function of the desired triad of colour percentages corresponding to the previously desired value of temperature, and detects any angular movement of the knob 10. The angular movement α of the knob 10 is transformed into the desired variation of temperature Δtset that is used to calculate the new desired value of temperature Tset from the previously set desired value of temperature. The angular movement α is considered positive if it is clockwise. The new desired value of temperature Tset is stored.

Now, a new desired triad of colour percentages is set as a function of the new desired value of temperature Tset, and the RGB LEDs 22 are supplied on the basis of the new triad of colour percentages. After a certain time has elapsed with no movements of the knob 10, for example 20 seconds, the microcontroller disables the function of desired temperature setting.

According to a further aspect of the invention, it is provided an electronic thermostat which substantially comprises the same components 14-22 described above, but is separated from the actuator 12 and the valve 5, and therefore is not housed in the cup-shaped body 2 of the valve assembly 1, and controls the actuator 12 by means of a wiring or of a wireless interface. Such electronic thermostat comprises a container (not shown), in which the components 14-22 are arranged and which is fixable to a wall of a room and has a circular opening coupled to the translucent disc 8, and includes the knob 10 coupled to the encoder 18 in the manner described above with reference to Figure 2. In this way, the thermostat can also be arranged in a different room from that in which the valve assembly 1 is present.

Although the invention described above makes particular reference to a very specific embodiment, variations, modifications or simplifications would be obvious to the expert in the art, such as for example:

- instead of RGB LEDs 22, incandescent bulbs provided with respective coloured lenses and coupled to an optical mixer;
- instead of the rotary knob 10, a slider coupled to the mobile terminal of a linear potentiometer for setting the desired temperature, the linear movement of the slider, and then the signal supplied by said potentiometer, being indicative of the desired variation of temperature ;
- instead of the disc 8, a translucent element having an oblong shape; and
- the table includes a plurality of different temperature values, suitable to setting the desired temperature of an air cooling plant using fan coils, namely a kind of heat exchangers different from radiators.

The main advantage of the valve assembly 1 described above is to provide an immediate visual indication of the desired value of temperature that has been set. Consequently, the adjustment of the valve assembly 1 becomes easy for users of any age group. Moreover, the valve assembly 1 can be more freely mounted, without worrying to place it where it is clearly visible to the user.

**Claims**

1. A method for providing a visual indication of a desired value of room temperature (Tset) for an electronic thermostat (13), method **characterised by** comprising:

   - storing a table associating a plurality of temperature values with a corresponding plurality of triads of colour percentages according to the RGB colour model;
   - determining a desired triad of colour percentages by means of interpolation of the triads of colour percentages of said table by using the desired value of temperature (Tset) as input data; and
   - powering at least one RGB light source (22) as a function of the desired triad of colour percentages, so as to generate a light signal having a colour that is correlated to the desired value of temperature (Tset).

2. A method according to claim 1, wherein said RGB light source comprises an RGB LED (22) having three elementary monochromatic LEDs, which are powered by respective PWM voltage signals, each of which has a duty cycle corresponding to a respective percentage of said desired triad of colour percentages.

3. A method according to claim 1 or 2, and comprising:

   - setting a desired variation of temperature (Δtset) through user command acquisition means (10, 18); and
   - determining said desired value of temperature (Tset) as a function of the desired variation of temperature (Δtset) and of a previously set temperature value.

4. A method according to claim 3, wherein said plurality of temperature values ranges from a minimum value (Tmin) to a maximum value (Tmax); the step of determining said desired value of temperature (Tset) comprising:

   - algebraically summing said desired variation of temperature (Δtset) to said previously set temperature value; and
   - if the sum exceeds the maximum value (Tmax), then the desired value of temperature (Tset) is set at the maximum value (Tmax); otherwise
   - if the sum is lower than the minimum value (Tmin), then the desired value of temperature (Tset) is set at the minimum value (Tmin); otherwise
   - if the sum is comprised between the minimum value (Tmin) and the maximum value (Tmax), then the desired value of temperature (Tset) is set at the sum.

5. A method according to claim 3 or 4, wherein said user command acquisition means (10, 18) comprise mechanical-electric transducer means (18), which are provided with a mobile control element (19) that can be manually operated to acquire a linear or angular movement (α), and said plurality of temperature values ranges from a minimum value (Tmin) to a maximum value (Tmax); the method comprising:

   - storing a maximum variation of temperature

($\Delta T$), which is equal to the difference between the maximum value (Tmax) and the minimum value (Tmin); and
- storing a maximum linear or angular movement (R) of the control element (19) corresponding to said maximum variation of temperature ($\Delta T$);

setting a desired variation of temperature ($\Delta$tset) comprising:

- determining the desired variation of temperature ($\Delta$tset) as a function of the product of the acquired movement ($\alpha$) by a ratio between said maximum variation of temperature (AT) and said maximum movement (R).

6. An electronic thermostat comprising user command acquisition means (10, 18) to set a desired variation of temperature ($\Delta$tset), displaying means (22), and control and processing means (15) configured to set a desired value of temperature (Tset) as a function of the desired variation of temperature ($\Delta$tset) and to control the displaying means (22) so as to provide a visual indication of the desired value of temperature (Tset) set; the thermostat (13) being **characterised in that** said displaying means comprises at least one RGB light source (22), and **in that** said control and processing means (15) comprises a memory and are configured to implement the method according to any of the claims from 1 to 5.

7. A thermostat according to claim 6 and comprising a container (2), in which at least said displaying means (22) and said control and processing means (15) are arranged, and a translucent disc (8), which is coupled to a circular opening (9) of the container (2); said RGB light source (22) being arranged in correspondence to said circular opening (9) under the translucent disc (8); said user command acquisition means (10, 18) comprising an encoder (18), whose shaft (19) has an end (19a) that projects from a central hole (20) of the translucent disc (8), and a rotating knob (10), which is mechanically coupled with said end (19a) of the shaft (19) of the encoder (18) so that the encoder (18) can generate a signal indicating the desired variation of temperature ($\Delta$tset) as a function of an angular movement ($\alpha$) imposed on the knob (10).

8. A thermostat according to claim 7, wherein said RGB light source comprises an RGB LED (22).

9. A thermostat according to claim 7 or 8, wherein a first face (23) of said translucent disc (8) comprises an annular abutment (24) to be coupled with said circular opening (9), and said knob (10) has a circular shape such as to cover the opposite face (25) of the translucent disc (8) and leave a cylindrical lateral surface (11) of the translucent disc (8) uncovered.

10. A thermostat according to claim 9, wherein said container comprises a cup-shaped body (2) with a circular symmetry and said circular opening (9) coincides with the opening of the cup-shaped body (2); said cylindrical lateral surface (11) being contiguous with said annular abutment (24); the diameter of the cylindrical lateral surface (11) and the outer diameter of said knob (10) being both substantially equal to the outer diameter of the cup-shaped body (2) in correspondence to the circular opening (9).

11. A valve assembly for a heat exchanger, the valve assembly (1) comprising a valve (5), which is suited to be mounted on a heat exchanger so as to adjust the flow of a heat transfer liquid flowing through the heat exchanger, an actuator (11) to operate the valve (5), and a thermostat (13) to control the actuator (11); the valve assembly (1) being **characterised in that** the thermostat is of the type claimed in any of the claims from 6 to 10.

**Patentansprüche**

1. Verfahren zum Bereitstellen einer optischen Anzeige eines Raumtemperatur-Sollwertes (Tset) für ein elektronisches Thermostat (13), wobei das Verfahren **dadurch gekennzeichnet ist, dass** es aufweist:

- Speichern einer Tabelle, die mehrere Temperaturwerte entsprechenden mehreren Dreiergruppen von Farbanteilen gemäß dem RGB-Farbmodell zuordnet;
- Bestimmen einer gewünschten Dreiergruppe von Farbanteilen durch Interpolation der Dreiergruppen von Farbanteilen der Tabelle unter Verwendung des Temperatur-Sollwertes (Tset) als Eingangsdatenelement; und
- Versorgen mindestens einer RGB-Lichtquelle (22) mit Strom als Funktion der gewünschten Dreiergruppe von Farbanteilen, um ein Lichtsignal mit einer mit dem Temperatur-Sollwert (Tset) korrelierten Farbe zu erzeugen.

2. Verfahren nach Anspruch 1, wobei die RGB-Lichtquelle eine RGB-LED (22) mit drei elementaren monochromatischen LEDs aufweist, die durch jeweilige PWM-Spannungssignale mit Strom versorgt werden, die jeweils ein Tastverhältnis haben, das einem jeweiligen Anteil der gewünschten Dreiergruppe von Farbanteilen entspricht.

3. Verfahren nach Anspruch 1 oder 2, ferner mit den Schritten:

- Einstellen einer gewünschten Temperaturänderung (Δtset) durch eine Benutzerbefehlerfassungseinrichtung (10, 18); und

- Bestimmen des Temperatur-Sollwertes (Tset) als Funktion der gewünschten Temperaturänderung (Δtset) und eines voreingestellten Temperaturwertes.

**4.** Verfahren nach Anspruch 3, wobei die mehreren Temperaturwerte in einem Bereich von einem Minimalwert (Tmin) und einem Maximalwert (Tmax) liegen, und wobei der Schritt zum Bestimmen des Temperatur-Sollwerts (Tset), aufweist:

- algebraisches Summieren der gewünschten Temperaturänderung (Δtset) zu dem voreingestellten Temperaturwert; und
- Setzen des Temperatur-Sollwertes (Tset) auf den Maximalwert (Tmax), wenn die Summe den Maximalwert (Tmax) überschreitet;
- Setzen des Temperatur-Sollwertes (Tset) auf den Minimalwert (Tmin), wenn die Summe niedriger ist als der Minimalwert (Tmin);
- Setzen des Temperatur-Sollwertes (Tset) auf die Summe, wenn die Summe zwischen dem Minimalwert (Tmin) und dem Maximalwert (Tmax) liegt.

**5.** Verfahren nach Anspruch 3 oder 4, wobei die Benutzerbefehlerfassungseinrichtung (10, 18) eine mechanisch-elektrische Wandlereinrichtung (18) aufweist, die ein bewegliches Bedienelement (19) aufweist, das manuell betätigbar ist, um eine lineare oder eine Winkelbewegung (α) zu erfassen, und wobei die mehreren Temperaturwerte in einem Bereich von einem Minimalwert (Tmin) und einem Maximalwert (Tmax) liegen, wobei das Verfahren die Schritte aufweise:

- Speichern einer maximalen Temperaturänderung (ΔT), die der Differenz zwischen dem Maximalwert (Tmax) und dem Minimalwert (Tmin) gleicht; und
- Speichern einer der maximalen Temperaturänderung (ΔT) entsprechenden maximalen linearen oder Winkelbewegung (R) des Bedienelements (19); und

Setzen einer gewünschten Temperaturänderung (Δtset) mit dem Schritt:

- Bestimmen der gewünschten Temperaturänderung (Δtset) als eine Funktion des Produkts zwischen der erfassten Bewegung (α) und einem Verhältnis zwischen der maximalen Temperaturänderung (ΔT) und der maximalen Bewegung (R).

**6.** Elektronisches Thermostat mit einer Benutzerbefehlerfassungseinrichtung (10, 18) zum Setzen einer gewünschten Temperaturänderung (Δtset), einer Anzeigeeinrichtung (22) und einer Steuer- und Verarbeitungseinrichtung (15), die dafür konfiguriert ist, einen Temperatur-Sollwert (Tset) als eine Funktion der gewünschten Temperaturänderung (Δtset) zu setzen und die Anzeigeeinrichtung (22) zu steuern, um eine optische Anzeige des gesetzten gewünschten Temperaturwertes (Tset) bereitzustellen,

wobei das Thermostat (13) **dadurch gekennzeichnet ist, dass**
die Anzeigeeinrichtung mindestens eine RGB-Lichtquelle (22) aufweist; und
die Steuer- und Verarbeitungseinrichtung (15) einen Speicher aufweist und dafür konfiguriert ist, das Verfahren nach einem der Ansprüche 1 bis 5 auszuführen.

**7.** Thermostat nach Anspruch 6, ferner mit einem Gehäuse (2), in dem mindestens die Anzeigeeinrichtung (22) und die Steuer- und Verarbeitungseinrichtung (15) angeordnet sind, und mit einer lichtdurchlässigen Scheibe (8), die mit einer kreisförmigen Öffnung (9) des Gehäuses (2) verbunden ist, wobei die RGB-Lichtquelle (22) in Zuordnung zu der kreisförmigen Öffnung (9) unter der lichtdurchlässigen Scheibe (8) angeordnet ist, wobei die Benutzerbefehlerfassungseinrichtung (10, 18) einen Codierer (18) aufweist, dessen Welle (19) ein Ende (19a) aufweist, das von einem Mittelloch (20) der lichtdurchlässigen Scheibe (8) hervorsteht, und einen Drehknopf (10), der mit dem Ende (19a) der Welle (19) des Codierers (18) mechanisch verbunden ist, so dass der Codierer (18) ein die gewünschte Temperaturänderung (Δtset) anzeigendes Signal als Funktion einer über den Drehknopf (10) ausgeführten Winkelbewegung (α) erzeugen kann.

**8.** Thermostat nach Anspruch 7, wobei die RGB-Lichtquelle eine RGB-LED (22) aufweist.

**9.** Thermostat nach Anspruch 7 oder 8, wobei eine erste Fläche (23) der lichtdurchlässigen Scheibe (8) eine ringförmige Auflagefläche (24) aufweist, die dafür vorgesehen ist, mit der kreisförmigen Öffnung (9) verbunden zu werden, und wobei der Drehknopf (10) eine kreisförmige Form hat, so dass er die gegenüberliegende Fläche (25) der lichtdurchlässigen Scheibe (8) abdeckt und eine zylinderförmige laterale Fläche (11) der lichtdurchlässigen Scheibe (8) unbedeckt bleibt.

**10.** Thermostat nach Anspruch 9, wobei das Gehäuse einen kreissymmetrischen becherförmigen Körper (2) aufweist und die kreisförmige Öffnung (9) mit der Öffnung des becherförmigen Körpers (2) übereinstimmt, die zylinderförmige laterale Fläche (11) an die ringförmige Auflagefläche (24) angrenzt, und der Durchmesser der zylinderförmigen lateralen Fläche (11) und der Außendurchmesser des Drehknopfs (10) beide dem Außendurchmesser des becherförmigen Körpers (2) in Zuordnung zur kreisförmigen Öffnung (9) im Wesentlichen gleichen.

11. Ventilanordnung für einen Wärmetauscher, wobei die Ventilanordnung (1) ein Ventil (5), das dazu geeignet ist, auf einem Wärmetauscher montiert zu werden, um den Durchfluss einer durch den Wärmetauscher strömenden Wärmeübertragungsflüssigkeit einzustellen, einen Aktuator (11) zum Betätigen des Ventils (5) und ein Thermostat (13) zum Steuern des Aktuators (11) aufweist,

wobei die Ventilanordnung (1) **dadurch gekennzeichnet ist, dass**
das Thermostat ein Thermostat nach einem der Ansprüche 6 bis 10 ist.

## Revendications

1. Procédé pour fournir une indication visuelle d'une valeur de température ambiante souhaitée (Tset) pour un thermostat électronique (13), le procédé étant **caractérisé en ce qu'**il comprend :

    - le stockage d'une table qui associe une pluralité de valeurs de température à une pluralité correspondante de triades de pourcentages de couleur conformément au modèle de couleurs RGB ;
    - la détermination d'une triade de pourcentages de couleur souhaitée au moyen d'une interpolation des triades de pourcentages de couleur de ladite table en utilisant la valeur de température souhaitée (Tset) en tant que donnée d'entrée ; et
    - l'activation d'au moins une source de lumière RGB (22) en fonction de la triade de pourcentages de couleur souhaitée, de manière à générer un signal lumineux présentant une couleur qui est corrélée à la valeur de température souhaitée (Tset).

2. Procédé selon la revendication 1, dans lequel ladite source de lumière RGB comprend une DEL RGB (22) comportant trois LED monochromatiques élémentaires, lesquelles sont activées au moyen de signaux de tension MIL respectifs dont chacun présente un rapport cyclique qui correspond à un pourcentage respectif de ladite triade de pourcentages de couleur souhaitée.

3. Procédé selon la revendication 1 ou 2, et comprenant :

    - le réglage d'une variation de température souhaitée (Δtset) par l'intermédiaire d'un moyen d'acquisition de commande d'utilisateur (10, 18) ; et
    - la détermination de ladite valeur de température souhaitée (Tset) en fonction de la variation de température souhaitée (Δtset) et d'une valeur de température réglée au préalable.

4. Procédé selon la revendication 3, dans lequel les valeurs de température de ladite pluralité de valeurs de température s'inscrivent dans une plage qui va depuis une valeur minimum (Tmin) jusqu'à une valeur maximum (Tmax) ; l'étape de détermination de ladite valeur de température souhaitée (Tset) comprenant :

    - la sommation algébrique de ladite variation de température souhaitée (Δtset) avec ladite valeur de température réglée au préalable ; et
    - si la somme excède la valeur maximum (Tmax), alors la valeur de température souhaitée (Tset) est réglée à la valeur maximum (Tmax) ; sinon
    - si la somme est inférieure à la valeur minimum (Tmin), alors la valeur de température souhaitée (Tset) est réglée à la valeur minimum (Tmin) ; sinon
    - si la somme est comprise entre la valeur minimum (Tmin) et la valeur maximum (Tmax), alors la valeur de température souhaitée (Tset) est réglée à la somme.

5. Procédé selon la revendication 3 ou 4, dans lequel ledit moyen d'acquisition de commande d'utilisateur (10, 18) comprend un moyen de transducteur mécano-électrique (18), lequel est muni d'un élément de commande mobile (19) qui peut être actionné manuellement de manière à acquérir un déplacement linéaire ou angulaire (α), et les valeurs de température de ladite pluralité de valeurs de température s'inscrivent dans une plage qui va depuis une valeur minimum (Tmin) jusqu'à une valeur maximum (Tmax), le procédé comprenant :

    - le stockage d'une variation de température maximum (ΔT), laquelle est égale à la différence entre la valeur maximum (Tmax) et la valeur minimum (Tmin) ; et
    - le stockage d'un déplacement linéaire ou angulaire maximum (R) de l'élément de commande (19) qui correspond à ladite variation de température maximum (ΔT) ;

le réglage d'une variation de température souhaitée (Δtset) comprenant :

    - la détermination de la variation de température souhaitée (Δtset) en fonction du produit du déplacement acquis (α) par un rapport entre ladite variation de température maximum (ΔT) et ledit déplacement maximum (R).

**6.** Thermostat électronique comprenant un moyen d'acquisition de commande d'utilisateur (10, 18) pour régler une variation de température souhaitée (Δtset), un moyen d'affichage (22), et un moyen de commande et de traitement (15) configuré de manière à régler une valeur de température souhaitée (Tset) en fonction de la variation de température souhaitée (Δtset) et de manière à commander le moyen d'affichage (22) de manière à ce qu'il fournisse une indication visuelle de la valeur de température souhaitée (Tset) réglée ; le thermostat (13) étant **caractérisé en ce que** ledit moyen d'affichage comprend au moins une source de lumière RGB (22) et **en ce que** ledit moyen de commande et de traitement (15) comprend une mémoire et est configuré de manière à mettre en oeuvre le procédé selon l'une quelconque des revendications 1 à 5.

**7.** Thermostat selon la revendication 6 et comprenant un contenant (2) dans lequel au moins ledit moyen d'affichage (22) et ledit moyen de commande et de traitement (15) sont agencés, et un disque translucide (8), lequel est couplé à une ouverture circulaire (9) du contenant (2) ; ladite source de lumière RGB (22) étant agencée en correspondance avec ladite ouverture circulaire (9) sous le disque translucide (8) ; ledit moyen d'acquisition de commande d'utilisateur (10, 18) comprenant un codeur (18) dont un arbre (19) comporte une extrémité (19a) qui fait saillie depuis un trou central (20) du disque translucide (8) et un bouton tournant (10) qui est couplé mécaniquement à ladite extrémité (19a) de l'arbre (19) du codeur (18) de telle sorte que le codeur (18) puisse générer un signal qui indique la variation de température souhaitée (Δtset) en fonction d'un déplacement angulaire (α) imprimé sur le bouton (10).

**8.** Thermostat selon la revendication 7, dans lequel ladite source de lumière RGB comprend une DEL RGB (22).

**9.** Thermostat selon la revendication 7 ou 8, dans lequel une première face (23) dudit disque translucide (8) comprend une butée annulaire (24) destinée à être couplée à ladite ouverture circulaire (9), et ledit bouton (10) présente une forme circulaire qui est telle qu'il peut recouvrir la face opposée (25) du disque translucide (8) et laisser une surface latérale cylindrique (11) du disque translucide (8) non recouverte.

**10.** Thermostat selon la revendication 9, dans lequel ledit contenant comprend un corps cupuliforme (2) présentant une symétrie circulaire et ladite ouverture circulaire (9) coïncide avec l'ouverture du corps cupuliforme (2) ; ladite surface latérale cylindrique (11) étant contiguë à ladite butée annulaire (24) ; le diamètre de la surface latérale cylindrique (11) et le diamètre externe dudit bouton (10) étant tous deux sensiblement égaux au diamètre externe du corps cupuliforme (2) en correspondance avec l'ouverture circulaire (9).

**11.** Assemblage de vanne pour un échangeur thermique, l'assemblage de vanne (1) comprenant une vanne (5), laquelle convient pour être montée sur un échangeur thermique de manière à régler l'écoulement d'un liquide de transfert thermique qui s'écoule au travers de l'échangeur thermique, un actionneur (11) afin d'actionner la vanne (5), et un thermostat (13) afin de commander l'actionneur (11) ; l'assemblage de vanne (1) étant **caractérisé en ce que** le thermostat est du type revendiqué selon l'une quelconque des revendications 6 à 10.

FIG.1

FIG.2

EP 2 897 018 B1

| T [K] | R [%] | G [%] | B [%] |
|---|---|---|---|
| 291,0 | 0 | 0 | 100 |
| 291,5 | 8 | 0 | 92 |
| 292,0 | 17 | 0 | 83 |
| 292,5 | 25 | 0 | 75 |
| 293,0 | 33 | 0 | 67 |
| 293,5 | 42 | 0 | 58 |
| 294,0 | 0 | 100 | 0 |
| 294,5 | 58 | 0 | 42 |
| 295,0 | 67 | 0 | 33 |
| 295,5 | 75 | 0 | 25 |
| 296,0 | 83 | 0 | 17 |
| 296,5 | 92 | 0 | 8 |
| 297,0 | 100 | 0 | 0 |

# FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1703356 A1